# EUROPEAN PATENT SPECIFICATION

(11) **EP 1 313 537 B1**
(45) Date of publication and mention of the grant of the patent: **29.11.2006**
(21) Application number: 01971383.3
(22) Date of filing: 28.08.2001
(51) Int. Cl.: B01D 25/26, B01D 25/34, B01D 35/30, B01D 29/41, B01D 29/96

(54) **CENTER POST SYSTEM FOR TRANSPORTING LENTICULAR FILTER CARTRIDGE ASSEMBLY**
MITTELPFOSTENSYSTEM ZUM FÖRDERN VON LINSENFÖRMIGER FILTEREINSATZVORRICHTUNG
SYSTEME A MONTANT POUR TRANSPORTER UN ENSEMBLE CARTOUCHES DE FILTRES LENTICULAIRES

(30) Priority: 29.08.2000 US 228590 P
(43) Date of publication of application: 28.05.2003
(73) Proprietor: 3M Innovative Properties Company, St. Paul, Minnesota 55133-3427 (US)
(72) Inventor: BLAZE, Martin, Hamden, CT 06514 (US); PULEK, John, L., Cheshire, CT 06410 (US)
(74) Representative: Charig, Raymond Julian
(86) International application number: PCT/US2001/041915
(87) International publication number: WO 2002/018030

(56) References cited:
- DE-A- 19 744 574
- DE-A- 19 949 613
- FR-A- 2 460 154
- GB-A- 738 043
- US-A- 3 666 107
- US-A- 5 667 679

## Description

### Background of the Disclosure

The present disclosure relates to systems, apparatuses and methods for easily installing and removing disk stacks from any one of a plurality of different housings and transporting the disk stacks, such as removable cell-type filters, through which fluids are passed for filtration, more particularly to systems, apparatuses and methods for easily, safely and effectively installing and removing and transporting disk stacks, such as removable cell-type filter cartridges, from any one of a plurality of different removable cell-type filter cartridge housings and, most particularly, to a modified center post for easily, safely and effectively installing, removing and transporting disk stacks, such as cell-type filter cartridges, from any one of a plurality of different removable filter cartridge housing.

Cell-type filter cartridges have long been known and have been increasingly used in a variety of filtration applications. These types of filter cartridges are typically fabricated from individual cells generally having two layers of filter media separated from each other by an annular space. Liquid typically flows from the outside of the filter medium into the space between the layers of the filter media toward the central portion of the cell where the center point is located. A significant advantage to cell-type filter cartridges is that the surface area of filter material is quite large when compared to the total volume of an assembled cell-type filter cartridge.

Disposed between each filter medium is a separator which is typically formed in the shape of disks having ribs radially extending from the central aperture in a spoke-like pattern. In addition to separating the two layers of filter media, it provides for fluid flow from the filter media toward the central aperture of the filter media.

The separator disk conventionally has stiffening members formed at the central aperture of the cell, which are attached to a plurality of separating ribs to provide a rigid, box-like structure sufficient to impart substantial cantilever strength to the ribs. Further, one of the stiffening disks is conventionally positioned proximate the ends of the separator ribs in order to act as a loadbearing surface to prevent media intrusion of the filtering medium and to prevent blocking the area of the flow path with the filtered liquid. Accordingly, one distinct advantage in this type of separator is that during use, erosion of the filter media is eliminated.

Generally, all of the aforementioned filter cartridges perform as anticipated during normal operating conditions. As can be expected after extended use, the filter becomes clogged and the flow rate diminishes accordingly. Then, the filter cartridges are typically replaced by grasping the periphery or edge of the uppermost filter cell, and then carefully lifting the attached filters over the center post away from the filter housing. This method relies on the strength of the individual wet cells, as well as that of the bands which interconnect the multiple filter cells, to prevent any one of the attached filter cells from breaking apart. The aforementioned method is problematic because of the increased weight of a wet filter cartridge as compared to the weight of a dry filter cartridge. This increased load is generally concentrated toward the center of the cartridge, thus resulting in the likelihood of the cartridge separating during the lifting operation.

A wet filter cartridge that breaks during removal from a filter housing causes several problems. Primarily, if the cartridge breaks while still in the vicinity of the housing, the particulate matter removed by the filters may re-enter the housing, thus requiring additional cleaning operations in and around the housing.

It is known to provide handles for lifting and carrying bulky items such as filter cartridge assemblies including handles operatively disposed on the filter cell cartridge, as disclosed in U.S. Patent No. 5,607,584 assigned to the assignee of the present application. However, the prior art does not provide means for removing a filter cartridge from a location, after removal of the filter cartridge dome, without an operator physically lifting the filter cartridge from its operating position and manually transporting the filter cartridge to a location removed from the operating position. Because the manual removal of the cartridge from the operating position often involves the use of stairs by an operator while transporting the heavy cartridge, as well as possibly contacting toxic substances on the exterior portion of the filter cartridges, systems including a lifting device and methods of using the lifting device that would eliminate the need for an operator to manually transport the cell-type filter cartridges and to reduce the overall time needed to initially install, remove and replace the cell-type filter cartridges in the housing is desirable.

As is known, many pharmaceutical and food and beverage filtration processors perform clean-in-place (CIP) and steam-in-place (SIP) operations to filter housings for sanitation, sterilization, and cleaning purposes. The internal design features of the housing greatly affect the efficiency, in terms of time and sanitation, of the CIP procedures. Prior to CIP, the filter cartridges must be removed from the filter housing. Therefore, it is desirable to remove fouled cartridges, and other related internal components, quickly and easily prior to CIP operations being conditional. Zeta-Plus cartridges, such as, for example, those made by the assignee of the present application, and other similar cartridges, pose a special concern due to the physical size and weight thereof. For example, a single 16" (0.4 m) Zeta-Plus cartridge can weigh about 50 pounds (23 kg) when saturated, requiring at least two (2) people and a considerable amount of time to complete a cartridge change-out, resulting in considerable equipment down time.

There have been previous attempts to solve the cartridge removal problem. In that regard, Cuno, Inc, the assignee of the present application, has developed a Basket/Cage and a Zeta-Grip^{®} lifting device. There have also been previous attempts to improve cleanability. In that regard, Seitz offers a double o-ring plug-in connector that is integral with the filter cartridge.

Presently, the above accessory devices can be used to eliminate direct operator lifting of the used cartridges. Accessories can be installed in the housing, such as the cage, which increases cleaning difficulty, or external, such as, for example, the Zeta-Grip^{®} lifting device, as described in WO 00/09434.

However, these devices all have significant shortcomings. Specifically, 12" (0.3 m) and 16" (0.4 m) diameter cartridges with a removable center post are typically removed by lifting a single cartridge up and over the center post. Following the removal of all the cartridges, the center post can be removed from the housing for cleaning. The attachment of the center post to the housing base has several shortcomings. Existing center posts are usually threaded for attachment to the housing base. These known stainless center posts (such as, for example, 316 stainless steel) can gall to the stainless housing base (such as, for example, 316 stainless steel) each time the center post is removed. The blind tapped hole located in the conventional housing base which interacts with the center post is presently not cleanable during CIP operations. Currently, the outlet flow path of the filtered fluid consists of three (3) semicircular webbed openings that cannot be sufficiently cleaned via CIP or without disassembling the housing outlet piping. Additionally, the housing outlet nozzle is typically single welded to the housing base, from the outside of the housing, producing an internal crevice that can not be cleaned by any means.

The above-described shortcomings may seem unrelated; however, they are all due to the center post being threaded into the center of the housing base and passing up through the center of the stack of cartridges. The center post can be used alone or in conjunction with a cage or the Zeta-Grip^{®} lifting device.

The Cuno cage allows the removal of one 12" (0.3 m) or 16" (0.4 m), diameter cartridge stack (up to 4 high) with the use of a hoist and chains. Once removed from the housing, the cartridges must be handled by an operator for removal from the cage. Use of the cage requires a large piece of extra hardware that must be enclosed in the pressure vessel during the filtration process. Cage vibration causes damage to the polished housing base and polished vessel shell. The cage can be removed from the pressure vessel for cleaning; however, it includes several crevices that are extremely difficult to clean. With the cage, steam-in-place (SIP) operations are more difficult as additional hardware is enclosed in the housing vessel. Finally, cages are fabricated from stainless steel wire that can easily be damaged.

The Zeta-Grip^{®} lifting device allows the removal of a single 12" (0.3 m) or 16" (0.4 m) diameter cartridge with the use of a hoist. One benefit is that no handling of the cartridge is required by the operator. Removing a single cartridge at a time using a hoist is ea-tremely slow. Additionally, the Zeta-Grip^{®} lilting device requires a great deal of headroom for proper operation (approximately 45" (1.1 m) above the housing vessel dome). The Zeta-Grip^{®} lifting device is physically large (weighs about 50 pounds (23 kg) and sized approximately 20"X 20''X 45"). Finally, the Zeta-Grip^{®} lifting device is not integral with the housing and must be stored remote from the housing when the housing is in use.

A system which uses a filter handling apparatus is described in FR 2460154. This apparatus has a filter support structure for use with layered stacks of filter plates and filter media, and not cell-type filter cartridges. The plates and media are positioned on the support structure and are locked into position using a tightening threaded member atop a center post member. The structure can be lifted from a filter housing using a lifting device so that the filter plates and media can be replaced.

Seitz offers a double o-ring plug-in connector that is integral with the filter cartridge. The double o-ring plug-in connector secures to the housing using locking tabs, similar to a bayonet lock connector. While this approach does relieve some cleaning issues, such as the absence of a center post, tightening nuts and threads, it also causes others such as internal locking tabs recesses that are difficult to clean. The double o-ring plug-in connector feature does not aid in cartridge removal.

Using the above-described equipment, existing Zeta-Plus systems and similar systems require a great deal of time to change out filter cartridges. Additionally, existing cartridge and housing systems are not CIP or SIP operationally friendly. Developing solutions to the above described problems would save considerable down time during process equipment maintenance.

Thus, there is a continuing need for improved systems and methods for easily, safely and effectively installing new, removing used and then transporting used disk stacks, such as cell-type filter cartridges, used in filtration operations from their operative position in housings after the housing enclosure has been removed. Such systems and methods should avoid manual lifting and transporting of the disk stacks. Such systems and methods should eliminate or at least minimize direct contact between operators and the cell-type filter disks in order to minimize operator contact with possible dangerous or toxic substances and minimize contaminating the environment of the filter housing with slippery, toxic or dangerous material that may have been collected on the outer surfaces of the cell-type filter disk. Such systems and methods should eliminate or endeavor to minimize any heavy lifting required by an operator, thereby contributing to a safer operating environment Such systems and methods should endeavor to reduce the overall time required to change cell-type filter cartridges and thereby reduce the downtime attributable thereto. Such systems and methods should provide for cleaner, less contaminated filter surfaces when new replacement cell-type filter cartridges are positioned in filter housings. Such systems and methods should provide for simplification of the filter-housing base, thereby enhancing the flow characteristics of cleaning solutions and steam. Such systems and methods should provide for the production of a truly pharmaceutical grade Zeta-Plus filter housing design.

### Summary of the Disclosure

An object of the present application is to provide systems and methods that significantly reduce, if not eliminate, the manual removal and transportation of cell-type filter cartridges.

Another object of the present application is to provide systems and methods for easily, safely and effectively removing and transporting used cell-type filter cartridges from an initial operating position in a filter housing unit to a remote location.

Still another object of the present application is to provide systems and methods for quickly, easily, safely and effectively installing new cell-type filter cartridges from a remote location to an initial operating position in a filter housing unit.

A further object of the present application is to provide systems and methods that minimize contact by an operator with possible toxic materials contained on the used cell-type filter cartridges.

Yet another object of the present application is to provide systems and methods for minimizing contamination of the filter housing environment.

Yet a further object of the present application is to provide systems and methods for reducing the overall time required changing cell-type filter cartridges in a filter housing.

Yet another object of the present application is to provide systems and methods for efficiently conducting CIP and/or SIP operations to the housings.

In accordance with these and further objects, one aspect of the present application includes an apparatus for handling filter disks, the handling apparatus comprising a center post member with opposed first and second end portions, an attachment member and an adapter member. The attachment member is operatively connected to the first end portion of the center post member and provides a means for operatively connecting or attaching to the handling apparatus and providing for the lifting thereof from a first position to a second position. The adapter member is operatively connected to the second end portion of the center post member and supports at least one filter disk which is slid over the first end portion onto the center post member.

Preferably, the handling apparatus further includes a lifting device operatively connected to the attachment member for vertically raising the handling apparatus such that the at least one filter disk can be transported from the first position to the second position. In one embodiment, the lifting device is a motor powered hoist. Alternatively, the lifting device can be a manually operated chain hoist, a bridge crane or any other mechanical device used for lifting operations.

It is presently preferred that the first position is an installed position within a filter assembly. In this position, fluid passes through the at least one filter disc which has been slid onto the center post member and is conditioned thereby. In this embodiment, the second position is a remote location, exterior to the filter assembly, where the at least one filter disk can be removed and replaced with a new filter disk.

It is envisioned that the attachment member is an eyebolt assembly having threads associated therewith for engaging with corresponding threads formed on the first end portion of the center post member. Alternatively, the attachment member can be a swivel hoist ring assembly having threads associated therewith which engage with the corresponding threads associated with the center post member. Still further, the attachment member can include a lifting eye which has been welded to the first end portion of the center post member.

The attachment member has an outside diameter which is smaller than a central aperture formed in the at least one filter disk, thereby allowing the at least one filter disk to be slid over the attachment member.

In this embodiment it is preferred that the adapter member is configured to support at least fourteen (14) filter disks. However, the adapter member can be configured to support at least fifty-six (56) filter disks. It is envisioned that in this embodiment, the adapter member has female threads formed therein for operatively engaging with corresponding male threads formed on the second end portion of the center post member.

The adapter member further includes at least one aperture formed therein which provides a flow passage through the adapter member. The apertures formed in the adapter member can be circular, semi-circular or any shape which suitable for providing a crevice free flow path.

Another aspect of the present disclosure includes a filter assembly comprising a housing, a base member, and at least one insert assembly. The housing has an interior chamber, a central axis and a bottom portion. The base member has opposed upper and lower surfaces and at least an inlet portion and an outlet portion, the upper surface being operative to sealingly engage the bottom portion of the housing.

The at least one insert assembly is sealingly engaged within the at least one outlet portion of the base member. The insert assembly includes an upper surface which mates with the upper surface of the base member and a central aperture. The central aperture sealing engages with a center post assembly that has at least one filter disk engaged thereon. The central aperture also provides a crevice-free flow path through the insert assembly when the center post assembly is disengaged therefrom which facilitates the cleaning of the interior chamber.

It is presently preferred that the upper surface of the base member has a raised portion located peripherally and lower portion positioned adjacent to the insert assembly. It is further envisioned that in this embodiment, the upper surface further includes a transition portion positioned between the raised and lower portion, the transition portion being at an angle with respect to the lower portion. This configuration facilitates the flow of fluid or cleaning material from the outer periphery of the base member to the insert assembly.

Alternatively, the upper surface of the base member can include a raised portion which is located along its periphery and a central region. The raised portion is adapted for sealing engagement with the bottom portion of the housing and connected to the central region by a concave surface.

The center post assembly presently comprises a center post member, an attachment member and an adapter member. The center post member has a first end portion and a second end portion. The attachment member is operatively engaged with the first end portion of the center post member and provides a means for connecting or attaching to the center post assembly and disengaging it from the at least one insert assembly.

In this configuration, the adapter member is operatively connected to the second end portion of the center post member. The adapter member supports at least one filter disk which is slid onto the center post member over the first end portion and also sealingly engages with the central aperture of the insert assembly when the center post assembly is in an installed position.

It is further envisioned that the adapter member further includes at least one circumferential groove formed in its outer portion, along the periphery. The groove is adapted and configured for receiving an o-ring which facilitates the sealing engagement of the adapter member with the central aperture of the insert assembly. Still further the adapter member includes at least one aperture formed therein for providing a flow passage through the adapter member when the center post member is in the installed position. As before the aperture can be circular or semi-circular.

Still another aspect of the present disclosure includes a method for handling filter disks from an initial position to a second position. The method includes the steps of providing at least one filter disk to be moved, sliding the at least one filter disk onto a handling apparatus, attaching a hoist device to the handling apparatus and vertically raising the handling apparatus and the at least one filter disk and effecting relocation of the at least one disk from the initial position the second position.

The handling apparatus which is utilized to transfer the filter disks from a first position to a second position includes a center post member having a first end portion and a second end portion, an attachment member, and an adapter member. The attachment member is operatively engaged with the first end portion of the center post member and the attachment member provides a means for connecting to the handling apparatus and facilitating the lifting of the apparatus from the initial position to the second position. The adapter member is operatively connected to the second end portion of the center post member and supports at least one filter disk which is slid over the first end portion onto the center post member.

Also described herein is an apparatus, not according to the invention, for handling filter disks, the handling apparatus comprising an elongated post member having first and second end portions, an attachment member and an adapter member. The attachment member is operatively connected to the first end portion of the elongated post member and provides a means for connecting to the handling apparatus and facilitating the lifting thereof from an installed position to a remote location. When the handling apparatus is operatively positioned within a filter housing it is in the installed position and when it is located exterior to the filter housing, it is in the "remote" location.

It is further envisioned that, the adapter member is operatively connected to the second end portion of the elongated post member and supports at least one filter disk which is slid over the first end portion onto the elongated post member. A lifting device is operatively connected to the attachment member for vertically raising the handling apparatus such that the at least one filter disk can be transported from the installed position to the remote location.

The lifting device can include a motor powered hoist, a manually operated chain hoist or any other mechanical device suitable for lifting. Additionally, the attachment member can be an eyebolt or a swivel hoist ring assembly which have threads associated therewith for engaging with corresponding threads formed on the first end portion of the elongated post member. Alternatively, the attachment member can be a lifting eye welded to the first end portion of the elongated post member. Preferably, the attachment member has an outside diameter which is smaller than a central aperture formed in the at least on filter disk thereby allowing the at least one filter disk to be slid over the attachment member

It is envisioned that the adapter member is configured to support at least fourteen (14) filter disks, and can be configured to support at least fifty-six (56) disks. Still yet further, the adapter member includes female threads formed therein for operatively engaging with corresponding male threads formed on the second end portion of the elongated post member and at least one aperture for providing a flow passage.

Also described herein is a filter assembly, not according to the invention, that comprises a housing, a base member, at least one filter disk, a center post assembly and at least one insert assembly. The housing has an interior chamber, a central axis and a bottom portion. The base member has opposed upper and lower surfaces and at least an inlet portion and an outlet portion. The upper surface being operative to sealingly engage with the bottom portion of the housing. The at least one filter disk having a central aperture operatively formed therein to allow the disk to be slidably engaged with the center assembly.

Presently preferably, the center post assembly includes a center post member having first and second end portions, an attachment member, and an adapter member. The attachment member operatively connected to the first end portion of the center post member, for operatively connecting and disengaging the center post assembly from the at least one insert assembly. The adapter member is operatively connected to the second end portion of the center post member for supporting the at least one filter disk when the at least one filter disk is operatively positioned on the center post member and sealingly engaged with the central aperture, when the center post member is in the installed position in the housing.

The at least one insert assembly is sealingly engaged within the at least one outlet portion of the base member and includes an upper surface which mates with the upper surface of the base member, a central aperture for sealing engagement with the center post assembly having at least one filter disk operatively positioned thereon. The central aperture provides a crevice-free flow path through the insert assembly when the center post member is disengaged therefrom thereby facilitating the cleaning of the interior chamber. It is presently preferred that he upper surface of the base member is downwardly sloped toward the insert assembly.

Other objects and advantages of the application will be apparent from the following description, the accompanying drawings and the appended claims.

### Brief Description of the Drawings

Figure 1 is a perspective view of a representative system used with the methods of the present application illustrating the filter disk handling apparatus of the present disclosure;
Figure 2 illustrates the filter disk removal/handling apparatus of Figure 1 positioned in a representative multiround housing;
Figures 3 illustrates the filter disk removal/handling apparatus of Figure 1 positioned in a representative split dome housing and having a bridge crane positioned overhead;
Figure 4 is a perspective view of the filter disk handling apparatus which includes a center post member having an attachment member and an adapter member operatively connected thereto;
Figure 5a-c illustrate the adapter member of the present disclosure which has six apertures, a central tapped hole and a circuferential recess formed therein;
Figure 5d is an enlarged perspective view of the center post member operatively engaged with the adapter member;
Figures 6 is a perspective view of the handling apparatus illustrating a plurality of stacked filter disks being lifted by the apparatus as it is disengaged from a filter housing base structure;
Figure 7 illustrates the innovative filter disk removal system of the present disclosure being disengaged from within a plurality of stacked filter disks;
Figure 8a is a side elevational view of the CIP/SIP features of the present housing;
Figure 8b is a partially enlarged cross-sectional view of the CIP/SIP features of the present housing;
Figure 9a is a side elevational view of a prior art filter housing;
Figure 9b is a partially enlarged cross-sectional view of the prior art filter housing of Figure 9a;
Figure 9c is a plan view of the prior art filter housing insert;
Figure 10 is a cross-section of the insert/outlet assembly of the present disclosure; and
Figures 11 illustrates the innovative cartridge removal system of the present disclosure with the center post member threadably engaged with the adapter member and the assembly formed thereby slideably engaged within the insert/outlet assembly of the housing.

### Detailed Description of the Embodiments

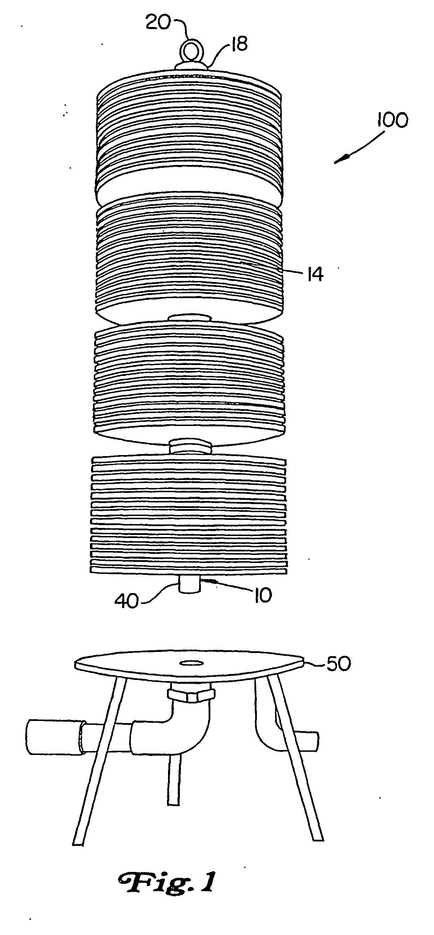

As shown in Figures 1-11, the system 100 disclosed in the present application is useful for both the initial installation and the removal of various filter cartridges from split dome housings and multi-round housings, with the system 100 being particularly effective in facilitating CIP and/or SIP operations.

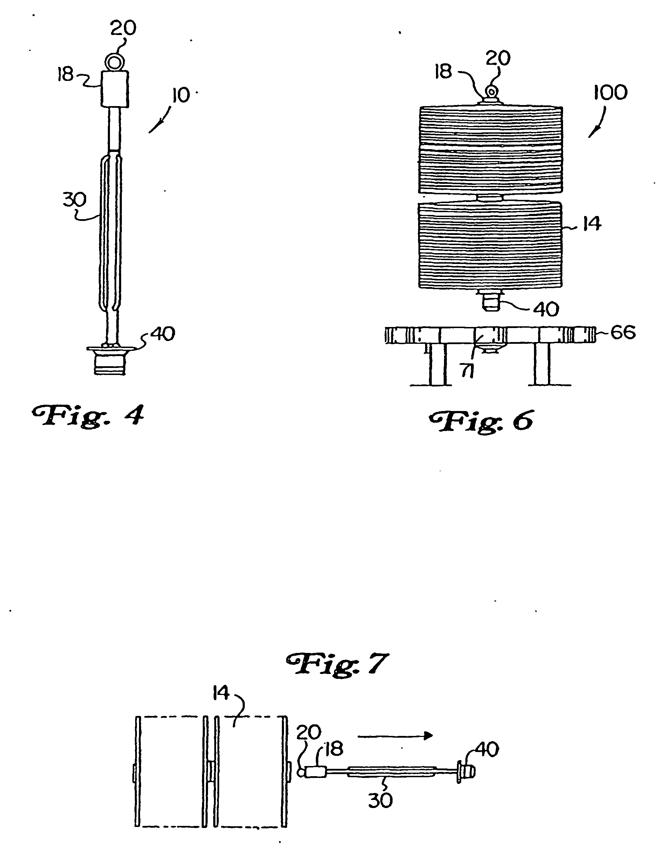

The system 100 of the present disclosure includes a filter disk handling apparatus 10 for installing, removing and transporting a plurality of cell-type filter cartridge assemblies 14 from an initial operating position to a remote location. The filter disk handling apparatus 10 includes center post member 30, as shown in Figures 4, 5d, 7 and 11 and, when used in the installing, removing and transporting mode, system 10 may further include a coupling 18 and attachment member 20 operatively positioned thereon. As shown herein, the coupling 18 and attachment member are of two-piece construction, however, they can be formed as a single structure. In the embodiment shown in Figure 4, the attachment member 20 is an eyebolt which has been threadably engaged with the coupling 18 of the center post member 30.

One new and unique component of the filter disk handling apparatus 10 and methods of the present disclosure is the adapter member 40 which is operatively connected to the opposite end of the center post 30 from the coupling 18 and the attachment member 20, as shown in Figures 1, 4, 5d, 6, and 7. The center post 30 is operatively connected to the adapter member, presently preferably, via the connection of a male member, such as, for example, a screw, operatively positioned on the end of the center post 30 into a female member operatively positioned in the adapter member 40. Details of the connection and the adapter member 40 will be discussed below.

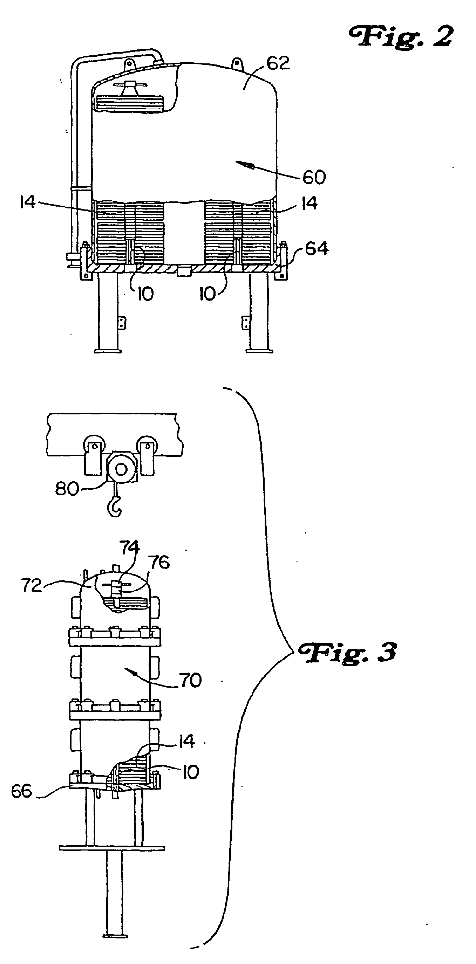

As shown in Figures 1-3, one representative cartridge removal system 100 is positioned inside a representative stack of cell-type filter cartridges 14 and can be operatively connected to a hoist 80 (shown in Figure 3 only). Figure 1 illustrates the stack of cell-type filter cartridges 14 being suspended slightly above a housing base 50. The filter disk handling apparatus 10, including the center post 30 and the adapter member 40, are in position for engagement with the housing base 50, or, in the event that the stack of cell-type filter cartridges 14 are plugged, are in a position to be transported from the location shown to a remote location for the removal of the center post 30 from between the stack of cell-type filter cartridges 14.

As shown in Figure 2, the system 100 provides for the rapid removal of used cartridges from a dome housing 60 after removal of the dome 62 and the rapid cartridge loading of a stack of the cell-type filter cartridges 14 into the base 64. In addition to the tremendously decreased cartridge removal and cartridge loading times, the filter disk handling apparatus 10 of a present disclosure significantly improves CIP/SIP of the filtration systems, as will be discussed in detail below.

A split dome housing 70 using the filter disk handling apparatus 10 of the present disclosure is illustrated in Figure 3. As will be noted, the split dome housing 70 has only one stack of cell-type filter cartridges positioned therein. This is in contrast to the multi-round housing 60 illustrated in Figure 2 wherein multiple stacks of cell-type filter cartridges 14 are positioned inside the dome 62 during normal operations.

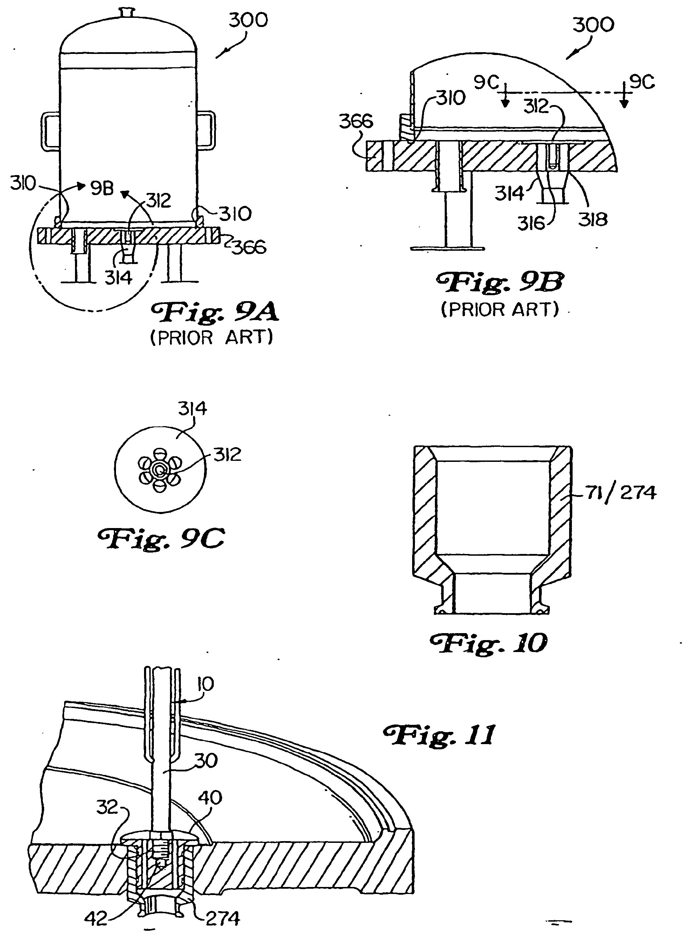

As shown in Figure 4, 5d and 11, a center post member 30 is shown assembled to the adapter member 40. Presently, the center post member has a threaded portion 32 associated with the end thereof which mates with a threaded tapped hole 42 (see Figure 11) inside the adapter member 40. While the thread and screw are presently preferred methods of connecting the center post member to the adapter member, it should be understood that any known method of connecting the center post to the adapter member could be used as long as the weight of the used cell-type filter cartridge stack can be safely removed from the housing base and transported to a remote location.

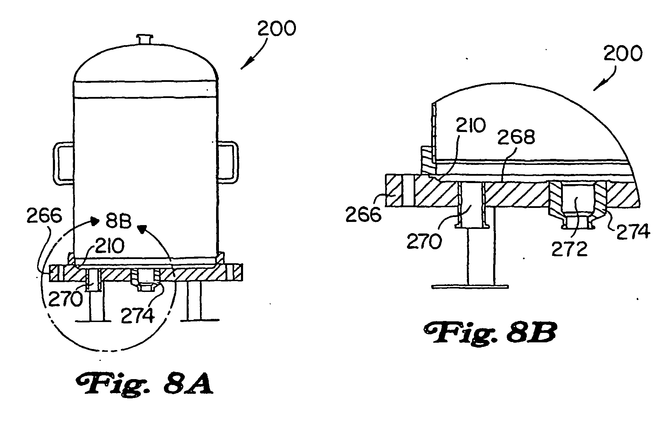

Referring now to Figures 3-7, in order to remove the cartridge stack, the housing 70 is vented, drained, and opened with the removal of the dome 72, as is known to those skilled in the art. A tightening nut 74 and protector plate 76 are removed from the upper end of the center post member 30, as is known to those skilled in the art. An attachment member 20, sized to be smaller than the central aperture of the cartridges, is then operatively connected to the center post 30. Such attachment member 20 should not be fully tightened and should turn freely after assembly thereon. Next, a hoist hook is attached to the attachment member 20 and an operator then raises the hoist straight up an appropriate distance, presently preferably about three inches, which is sufficient to clear the end of the adapter member 40 from the insert 71 of housing base 66. In Figure 6, the representative cartridge stack 14 is shown suspended above the housing base 66.

Once the adapter member 40 clears the insert 71, the cartridge stack is maneuvered to a disposal area via hoist. At this point, the cartridge stack is lowered to a horizontal position (Figure 7) and the hoist hook is removed from the attachment member 20. The center post 30 is then removed from the cartridge stack by sliding the filter disk handling apparatus 10 out from the center of the cartridge stack, as shown in the Figures. Upon the removal of the filter disk handling apparatus 10, the used cartridges are discarded and the center post device, after appropriate maintenance and cleaning, may then be returned for use with another stack of cartridges.

Installation of the filter disk handling assembly 10 and the assembly of the cartridge stack 14 into the housing base may be accomplished similarly, as described above, but in reverse sequence.

Figures 8a and 8b illustrate the improved housing of the subject disclosure which is designated by reference number 200. As discussed supra, the prior art standard housing is not particularly amenable to CIP/SIP operations. Specifically, as illustrated in Figures 9a-c, the configuration of the prior art housing 300 includes sharp corners 310 which trap contaminants and are difficult to clean. Also, due to the configuration of the prior art center post system and its engagement with insert 314, the housing 300 further includes a blind tapped hole 312 for engagement with the center post. This bind tapped hole 312 and flow apertures formed in the insert 314 also trap contaminants and are extremely difficult to clean. Additionally, the configuration of the insert 314 is such that an inaccessible surface 316 and a crevice 318 exist which further complicate cleaning operations.

Housing 200 of the present disclosure eliminates the cleaning obstacles associated with prior art housings. Additionally, the sharp corner formed in the base is eliminated by incorporating a radius corner 210. The bottom 268 of the base 266 is tapered from inlet 270 into the filtered fluid outlet 272. There are no blind holes or tapped holes formed in base 266. Additionally, there are no crevices, thus there is a simple, direct flow path of the fluid after the removal of the filter disk handling apparatus from its mating position in the housing with the insert 274.

As shown in Figure 10, by removing structure of the adapter member 314 (Figures 9a-9c) from the prior art position permanently attached to the inside of the outlet of the base 366 and restructuring the adapter member as a removable member operatively connected to the center post, tremendous advantages in CIP and in the removability and installation of the cell-type filter cartridges are obtained.

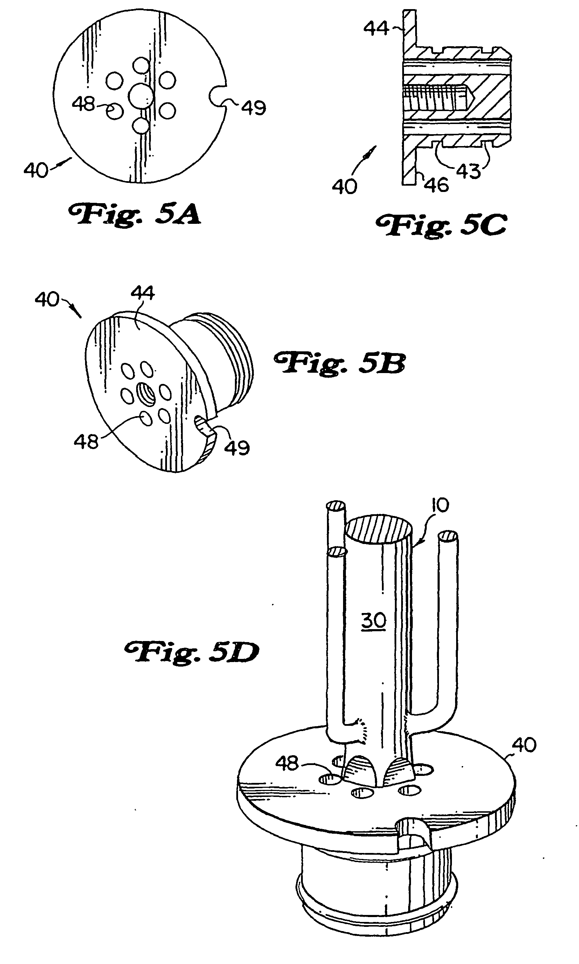

Figure 11 shows the new adapter member 40 operatively positioned in the insert 274. As shown, an O ring groove 42 is operatively positioned as close as possible to the inside diameter in order to minimize any crevice. As shown in Figure 8a, in one specific embodiment, about a one-half inch radius 210 is machined into the base 266 for improved cleaning operations, about a one degree taper toward the inlet is provided for improved drainage and approximately a 4 ½ inch wide flat area is provided for weld fabrication, polishing and cartridge sealing purposes. An anti-rotation pin (not shown) is operatively positioned in the base for restricting the adapter member 40 from rotation while tightening the cartridge seal nut 74 (Figure 3). The anti-rotation pin engages with a corresponding recess 49 formed in adapter member flange 44 (see Figure 5a)About a one degree taper continues toward the inlet for drainage facilitation. Details of the center post insert/outlet 71/274 are shown in Figure 10 and are representative of a design which greatly facilitates CIP and/or SIP operation.

As shown in Figures 5a-c, details of a representation adapter member 40 are illustrated. As shown, one specific embodiment of the adapter member comprises a base plate 44 or a base member having a flange 46. The base member has, presently preferably, six apertures 48 positioned therein for allowing the filtered fluid to be moved from the fluid filtration system to a filtered fluid collection. The apertures 48 are, presently preferably, equally spaced about a tapped, threaded hole 42, operatively positioned in the middle thereof for receiving the threaded portion 32 of the center post 30. Two grooves 43 are formed in the outer portion of the post adapter 40 for receiving O rings for sealing with the insert 274.

The center post removal device of the present disclosure is also advantageous to initially place cell-type filter cartridges in the operating position prior to being enclosed within an enclosure, in order to reduce reloading time.

With an empty housing and the dome removed from the housing base, installation of the modified center post containing a stack of cartridges to the modified housing base is accomplished as follows: (a.) Install two (2) new O-rings on adapter member; (b.) lubricate the O-rings using water or process fluid; (c.) install the center post into the housing base, the housing base being bored and tapered to accept the adapter member and an anti-rotation pin is welded to the housing base; (d.) when inserting the adapter into the housing base, ensure the anti-rotation pin is correctly aligned; (e.) install the following: the housing gasket, the baffle plate, the filter cartridges, the protector plate, tightening nut, and (f.) close the housing.

By adapting a conventional center post with a plug-in connector, one entire cartridge stack (1 or more cartridges) can be detached from the housing base in a single motion using a hoist. The housing can then be closed for CIP operations or immediately loaded with fresh cartridges on a preloaded center post. Process downtime is drastically reduced. Once the process is back on-line or CIP has begun, the fouled cartridges and internals can be disassembled, cleaned, or discarded. Other existing shortcomings (blind tapped hole, webbed outlet flow path, weld crevice, etc.) will no longer exist as the housing base will be modified to accept the plug-in connector. With the internals removed, the outlet flow path is a simple, tapered through hole that can easily be cleaned.

Several possible variations of the system of the present disclosure exist. The plug-in connector could be sealed to the housing base via a single o-ring, double o-rings, mechanical seals, or gaskets. The adapter flange surface could be tapered for drainage. The anti-rotation pin and groove might become a pin and tongue to simplify assembly. The flow path through the adapter will be enlarged and semi-circularly shaped. The center post could be welded to the adapter rather than threaded into the adapter. Materials, dimensions, fits, lead-in angle may be modified and optimized.

The innovations described above primarily provide for rapid cartridge stack removal and installation. These new features also provide for greater simplification of the filter-housing base, thereby enhancing the flow characteristics of cleaning solutions and steam. Combined, the new innovations provide for the production of a truly pharmaceutical grade filter housing design.

By modifying the standard center post with a double o-ring plug-in connector, one entire cartridge stack (4 cartridges) can be detached from the housing base in a single motion using a hoist. The housing can then be closed for CIP operations or immediately loaded with fresh cartridges on a preloaded modified center post modified in accordance with the teachings of the present disclosure. Among the benefits derived from the modified center post and housing base of the present disclosure is the drastically reduced process downtime achieved. Once the process is back on-line using a preloaded modified center post, the fouled cartridges and internals can be disassembled, cleaned, or discarded.

It should be clear that the systems, apparatus and methods of the present disclosure have met the objectives of the application. Specifically, the systems methods provide for easy, safe and effective handling of unused and used disk stacks, such as cell-type filter cartridges, used in filtration operations including, but not limited to, the use of the center post removal device and remove used cartridges from their operative position in a housing after the housing enclosure has been removed; provide for the avoidance of manual lifting and transporting of the disk stacks; have eliminated or at least minimized direct contact between an operator and the cell-type disk stacks in order to minimize operator contact with possible dangerous or toxic substances and minimizing contaminating the environment of the filter housing with slippery, toxic or dangerous materials that may have collected on the outer surfaces of the cell-type filter disk; have eliminated or at least minimized any heavy lifting required by an operator; have endeavored to reduce the overall time required to change cell-type filter cartridges and thereby reduce the down time attributable thereto.

While the systems and methods for using the systems contained herein constitute preferred embodiments of the disclosure, it is to be understood that the disclosure is not limited to these precise systems and methods, and that changes may be made therein without departing from the scope of the disclosure which is defined in the appended claims.

## Claims

1. An apparatus (10) for handling filter disks (14), the apparatus comprising:
a center post member (30) having first and second end portions;
an attachment means (20) operatively connected to the first end portion of the center post member, the attachment means including means for facilitating the lifting of at least one filter disk from a first position to a second position, wherein the attachment means has an outside dimension which is smaller than a central aperture formed in the at least one filter disk, thereby allowing the at least one filter disk to be slid over the attachment means such that the apparatus is separated from the at least one filter disk by sliding the apparatus out from the center of the at least one filter disk; and
an adapter member (40), operatively connected to the second end portion of the center post member, for supporting the at least one filter disk when the at least one filter disk is operatively positioned relative to the apparatus.

2. The apparatus of claim 1, further comprising:
a lifting device (80) operatively connected to the attachment means (20) for vertically raising the handling apparatus (10) such that the at least one filter disk (14) can be transported from the first position to the second position.

3. The apparatus of claim 1, wherein the first position is an installed position within a filter assembly (100) in which fluid passes through the at least one filter disk (14) operatively positioned relative to the center post member (30) and the second position is a remote location exterior to the filter assembly where the at least one filter disk can be removed from the center post member and replaced with at least one new filter disk thereon.

4. The apparatus of claim 1, wherein the at least one filter disk (14) is operatively positioned relative to the center post member (30) by sliding the at least one disk over the first end portion of the center post member.

5. The apparatus of claim 1, wherein
the first position is an installed position and the second position is a remote location, the installed position being when the handling apparatus (10) is operatively positioned within a filter assembly (100) and the remote location being a location exterior to the filter assembly,
the handling apparatus further comprising:
a lifting device (80), operatively connected to the attachment means (20), for removing the handling apparatus from the filter assembly such that the at least one filter disk (14) can be transported from the installed position to the remote location.

6. The apparatus of claim 2 or claim 5, wherein the lifting device (80) comprises:
a motor powered hoist.

7. The apparatus of claim 2 or claim 5, wherein the lifting device (80) comprises:
a manually operated chain hoist.

8. The apparatus of claim 5, wherein the remote location comprises:
a location where the at least one filter disk (14) can be removed and replaced with a new filter disk.

9. The apparatus of claim 1 or claim 5, wherein the attachment means (20) comprises:
an eyebolt assembly having threads associated therewith for engaging with corresponding threads formed on the first end portion of the center post member (30).

10. The apparatus of claim 1 or claim 5, wherein the attachment means (20) comprises:
a swivel hoist ring assembly having threads associated therewith, the threads engaging with corresponding threads formed on the first end portion of the center post member (30).

11. The apparatus of claim 1 or claim 5, wherein the attachment means (20) comprises a lifting eye welded to the first end portion of the center post member (30).

12. The apparatus of claim 1 or claim 5, wherein the adapter member (40) is configured to support at least fourteen filter disks.

13. The apparatus of claim 12, wherein the adapter member (40) is configured to support at least fifty-six filter disks.

14. The apparatus of claim 1 or claim 5, wherein the adapter member (40) has female threads (42) formed therein for operatively engaging with corresponding male threads (32) formed on the second end portion of the center post member (30).

15. The apparatus of claim 1 or claim 5, wherein the adapter member (40) further comprises at least one aperture (48) formed therein, the at least one aperture providing a flow passage through the adapter member.

16. The apparatus of claim 15, wherein the at least one aperture is semi-circular (49).

17. A filter housing assembly (100) comprising:
a housing (60, 70, 200) having an interior chamber for processing fluid, a central axis and a bottom portion;
a base member (50, 64, 66, 266) having opposed upper and lower surfaces and at least an inlet portion (270) and an outlet portion (272), the upper surface being operative to sealingly engage the bottom portion (268) of the housing; and
at least one insert assembly (71, 274) sealingly engaged within the at least one outlet portion of the base member, the insert assembly comprising:
an upper surface which mates with the upper surface of the base member; and
a central aperture for sealing engagement with a handling apparatus (10) as claimed in claim 1, that has at least one filter disk (14) engaged thereon, the central aperture providing a crevice-free flow path through the insert assembly when the handling apparatus is disengaged therefrom such that, after the removal of the filter disk handling apparatus from sealing engagement with the bottom portion of the housing, a substantially direct flow path for the fluid results thereby facilitating the cleaning of the interior chamber of the housing.

18. The filter assembly of claim 17, wherein the upper surface of the base member (266) has a raised portion located peripherally and lower portion positioned adjacent to the insert assembly (71, 274).

19. The filter assembly of claim 18, wherein the upper surface has a transition portion (210) between the raised and lower portions, the transition portion at an angle with respect to the lower portion.

20. The filter assembly of claim 17, wherein the attachment means (20) of the handling apparatus (10) includes means (18) for connecting to the center post member (30) and for disengaging from the at least one insert assembly (71, 274); and
the adapter member (40) sealingly engages with the central aperture of the insert assembly when the handling apparatus is in an installed position in the housing (60, 70, 200).

21. The filter assembly of claim 20 further comprising:
at least one filter disk (14) having a central aperture operatively formed therein.

22. The filter assembly of claim 21, wherein the upper surface of the base member (266) is downwardly sloped toward the insert assembly (71, 274).

23. The filter assembly of claim 17 or claim 21, wherein the upper surface of the base member (266) includes a raised portion located along the periphery of the upper surface and a central region, the raised portion engaging with the bottom portion (268) of the housing (200) and connected to the central region by a concave surface.

24. The filter assembly of claim 20 or claim 21, wherein the adapter member (40) further comprises:
at least one circumferential groove (42, 43) formed in an outer portion of the adapter member for receiving an O-ring and facilitating the sealing engagement of the adapter member with the central aperture of the insert assembly (71, 274).

25. The filter assembly of claim 24, wherein the adapter member (40) further comprises:
at least one aperture (48) formed therein for providing a flow passage through the adapter member when the center post member (30) is in the installed position.

26. The filter assembly of claim 25, wherein the at least one aperture is semi-circular (49).

27. A method for handling filter disks (14) from a first position to a second position such that the used filter disks are removed, the method comprising the acts of:
providing at least one filter disk (14) operatively positioned on a handling apparatus (10), the handling apparatus comprising:
a center post member (30) having a first end portion and a second end portion;
an attachment means (20), operatively engaged with the first end portion of the center post member and including means for facilitating the lifting of at least one filter disk from a first position to a second position, wherein the attachment means has an outside dimension which is smaller than a central aperture formed in the at least one filter disk, thereby allowing the at least one filter disk to be slid over the attachment means such that the handling apparatus is separated from the at least one filter disk by sliding the handling apparatus out from the center of the at least one filter disk; and
an adapter member (40), operatively connected to the second end portion of the center post member for supporting the at least one filter disk when the at least one filter disk is operatively positioned relative to the center post member;
attaching a vertical lifting device (80) to the handling apparatus; and
vertically lifting the handling apparatus and the at least one filter disk;
relocating the at least one filter disk from the first position to the second position; and
at the second position, sliding the handling apparatus out from the center of the at least one filter disk such that the handling apparatus is removed from the at least one filter disk.

## Patentansprüche

1. Vorrichtung (10) zum Handhaben von Filterscheiben (14), wobei die Vorrichtung aufweist:
ein Mittelpfostenglied (30) mit einem ersten und einem zweiten Endabschnitt;
ein Befestigungsmittel (20), das betriebsbereit mit dem ersten Endabschnitt des Mittelpfostenglieds verbunden ist, wobei das Befestigungsmittel Mittel zum Ermöglichen des Hebens mindestens einer Filterscheibe von einer ersten Position zu einer zweiten Position aufweist, wobei das Befestigungsmittel eine äußere Abmessung aufweist, die kleiner als eine zentrale Öffnung ist, die in der mindestens einen Filterscheibe ausgebildet ist, wodurch ermöglicht wird, dass die mindestens eine Filterscheibe derart über das Befestigungsmittel geschoben wird, dass die Vorrichtung von der mindestens einen Filterscheibe getrennt wird, indem die Vorrichtung von der Mitte der mindestens einen Filterscheibe hinausgeschoben wird; und
ein Anpassungsglied (40), das mit dem zweiten Endabschnitt des Mittelpfostenglieds betriebsbereit verbunden ist, um die mindestens eine Filterscheibe zu stützen, wenn die mindestens eine Filterscheibe bezüglich der Vorrichtung betriebsbereit positioniert ist.

2. Vorrichtung nach Anspruch 1, die ferner aufweist:
eine Hebevorrichtung (80), die mit dem Befestigungsmittel (20) zum vertikalen Heben der Handhabungsvorrichtung (10) betriebsbereit verbunden ist, so dass die mindestens eine Filterscheibe (14) von der ersten Position zu der zweiten Position transportiert werden kann.

3. Vorrichtung nach Anspruch 1, wobei die erste Position eine installierte Position innerhalb einer Filteranordnung (100) ist, in welcher Fluid durch die mindestens eine Filterscheibe (14) strömt, die bezüglich des Mittelpfostenglieds (30) betriebsbereit positioniert ist, und die zweite Position eine entfernte Stelle ist, die außerhalb der Filteranordnung liegt, wobei die mindestens eine Filterscheibe von dem Mittelpfostenglied entfernt und durch mindestens eine neue Filterscheibe darauf ersetzt werden kann.

4. Vorrichtung nach Anspruch 1, wobei die mindestens eine Filterscheibe (14) bezüglich des Mittelpfostenglieds (30) betriebsbereit positioniert wird, indem die mindestens eine Scheibe über den ersten Endabschnitt des Mittelpfostenglieds geschoben wird.

5. Vorrichtung nach Anspruch 1, wobei
die erste Position eine installierte Position und die zweite Position eine entfernte Stelle ist, wobei die installierte Position erreicht ist, wenn die Handhabungsvorrichtung (10) innerhalb einer Filteranordnung (100) betriebsbereit positioniert ist, und die entfernte Stelle eine Stelle außerhalb der Filteranordnung ist,
wobei die Handhabungsvorrichtung ferner aufweist:
eine Hebevorrichtung (80), die mit dem Befestigungsmittel (20) betriebsbereit verbunden ist, um die Handhabungsvorrichtung von der Filteranordnung derart zu entfernen, dass die mindestens eine Filterscheibe (14) von der installierten Position zu der entfernten Stelle transportiert werden kann.

6. Vorrichtung nach Anspruch 2 oder 5, wobei die Hebevorrichtung (80) aufweist:
einen motorbetriebenen Hebezug.

7. Vorrichtung nach Anspruch 2 oder 5, wobei die Hebevorrichtung (80) aufweist:
einen manuell betriebenen Kettenzug.

8. Vorrichtung nach Anspruch 5, wobei die entfernte Stelle aufweist:
eine Stelle, bei der die mindestens eine Filterscheibe (14) entfernt und durch eine neue Filterscheibe ersetzt werden kann.

9. Vorrichtung nach Anspruch 1 oder 5, wobei das Befestigungsmittel (20) aufweist:
eine Augenschraubenanordnung mit Gewinden, die damit zum Eingriff mit entsprechenden Gewinden in Verbindung stehen, die auf dem ersten Endabschnitt des Mittelpfostenglieds (30) ausgebildet sind.

10. Vorrichtung nach Anspruch 1 oder 5, wobei das Befestigungsmittel (20) aufweist:
eine Schwenkhebezug-Ringanordnung mit Gewinden, die damit in Verbindung stehen, wobei die Gewinde in entsprechende Gewinde eingreifen, die auf dem ersten Endabschnitt des Mittelpfostenglieds (30) ausgebildet sind.

11. Vorrichtung nach Anspruch 1 oder 5, wobei das Befestigungsmittel (20) eine Hebeöse aufweist, die an den ersten Endabschnitt des Mittelpfostenglieds (30) geschweißt ist.

12. Vorrichtung nach Anspruch 1 oder 5, wobei das Anpassungsglied (40) gestaltet ist, um mindestens vierzehn Filterscheiben zu stützen.

13. Vorrichtung nach Anspruch 12, wobei das Anpassungsglied (40) gestaltet ist, um mindestens sechsundfünfzig Filterscheiben zu stützen.

14. Vorrichtung nach Anspruch 1 oder 5, wobei das Anpassungsglied (40) Innengewinde (42) aufweist, die darin ausgebildet sind, um in entsprechende Außengewinde (32), die auf dem zweiten Endabschnitt des Mittelpfostenglieds (30) ausgebildet sind, betriebsbereit einzugreifen.

15. Vorrichtung nach Anspruch 1 oder 5, wobei das Anpassungsglied (40) ferner mindestens eine Öffnung (48) aufweist, die darin ausgebildet ist, wobei die mindestens eine Öffnung einen Strömungsdurchgang durch das Anpassungsglied bereitstellt.

16. Vorrichtung nach Anspruch 15, wobei die mindestens eine Öffnung halbkreisförmig (49) ist.

17. Filtergehäuseanordnung (100), die aufweist:
ein Gehäuse (60, 70, 200) mit einer inneren Kammer zum Verarbeiten von Fluid, einer Zentralachse und einem Bodenabschnitt;
ein Basisglied (50, 64, 66, 266), das gegenüberliegende obere und untere Flächen und mindestens einen Einlassabschnitt (270) und einen Auslassabschnitt (272) aufweist, wobei die obere Fläche betriebsbereit ist, um in den Bodenabschnitt (268) des Gehäuses abdichtend einzugreifen; und
mindestens eine Einsatzanordnung (71, 274), die innerhalb des mindestens einen Auslassabschnitts des Basisglieds abdichtend in Eingriff gebracht ist, wobei die Einsatzanordnung aufweist:
eine obere Fläche, die mit der oberen Fläche des Basisglieds übereinstimmt; und
eine zentrale Öffnung zum abdichtenden Eingriff mit einer Handhabungsvorrichtung (10) nach Anspruch 1, auf der mindestens eine Filterscheibe (14) in Eingriff gebracht ist, wobei die zentrale Öffnung einen spaltenfreien Strömungspfad durch die Einsatzanordnung bereitstellt, wenn die Handhabungsvorrichtung davon gelöst wird, so dass nach der Lösung der Filterscheiben-Handhabungsvorrichtung aus dem abdichtenden Eingriff mit dem Bodenabschnitt des Gehäuses ein im Wesentlichen direkter Strömungspfad für das Fluid entsteht, wodurch die Reinigung der inneren Kammer des Gehäuses ermöglicht wird.

18. Filteranordnung nach Anspruch 17, wobei die obere Fläche des Basisglieds (266) einen erhöhten Abschnitt, der bezüglich des Umfangs angeordnet ist, und einen unteren Abschnitt aufweist, der benachbart zu der Einsatzanordnung (71, 274) positioniert ist.

19. Filteranordnung nach Anspruch 18, wobei die obere Fläche einen Übergangsabschnitt (210) zwischen dem erhöhten und dem unteren Abschnitt aufweist, wobei der Übergangsabschnitt in einem Winkel bezüglich des unteren Abschnitts liegt.

20. Filteranordnung nach Anspruch 17, wobei das Befestigungsmittel (20) der Handhabungsvorrichtung (10) Mittel (18) zum Verbinden mit dem Mittelpfostenglied (30) und zum Lösen von der mindestens einen Einsatzanordnung (71, 274) aufweist; und
das Anpassungsglied (40) in die zentrale Öffnung der Einsatzanordnung abdichtend eingreift, wenn sich die Handhabungsvorrichtung in einer installierten Position in dem Gehäuse (60, 70, 200) befindet.

21. Filteranordnung nach Anspruch 20, die ferner aufweist:
mindestens eine Filterscheibe (14) mit einer zentralen Öffnung, die darin betriebsbereit ausgebildet ist.

22. Filteranordnung nach Anspruch 21, wobei die obere Fläche des Basisglieds (266) nach unten zu der Einsatzanordnung (71, 274) geneigt ist.

23. Filteranordnung nach Anspruch 17 oder Anspruch 21, wobei die obere Fläche des Basisglieds (266) einen erhöhten Abschnitt aufweist, der entlang des Umfangs der oberen Fläche und eines zentralen Bereichs angeordnet ist, wobei der erhöhte Abschnitt mit dem Bodenabschnitt (268) des Gehäuses (200) in Eingriff steht und mit dem zentralen Bereich durch eine konkave Fläche verbunden ist.

24. Filteranordnung nach Anspruch 20 oder Anspruch 21, wobei das Anpassungsglied (40) ferner aufweist:
mindestens eine Umfangsnut (42, 43), die in einem äußeren Abschnitt des Anpassungsglieds ausgebildet ist, um einen O-Ring aufzunehmen und den abdichtenden Eingriff des Anpassungsglieds mit der zentralen Öffnung der Einsatzanordnung (71, 274) zu ermöglichen.

25. Filteranordnung nach Anspruch 24, wobei das Anpassungsglied (40) ferner aufweist:
mindestens eine Öffnung (48), die darin ausgebildet ist, um einen Strömungsdurchgang durch das Anpassungsglied bereitzustellen, wenn sich das Mittelpfostenglied (30) in der installierten Position befindet.

26. Filteranordnung nach Anspruch 25, wobei die mindestens eine Öffnung halbkreisförmig (49) ist.

27. Verfahren zum Handhaben von Filterscheiben (14) von einer ersten Position zu einer zweiten Position, so dass die benutzten Filterscheiben entfernt werden, wobei das Verfahren die folgenden Schritte aufweist:
Bereitstellen mindestens einer Filterscheibe (14), die betriebsbereit auf einer Handhabungsvorrichtung (10) positioniert ist, wobei die Handhabungsvorrichtung aufweist:
ein Mittelpfostenglied (30) mit einem ersten Endabschnitt und einem zweiten Endabschnitt;
ein Befestigungsmittel (20), das mit dem ersten Endabschnitt des Mittelpfostenglieds betriebsbereit in Eingriff steht und Mittel aufweist, um das Heben mindestens einer Filterscheibe von einer ersten Position zu einer zweiten Position zu ermöglichen, wobei das Befestigungsmittel eine äußere Abmessung aufweist, die kleiner als eine zentrale Öffnung ist, die in der mindestens einen Filterscheibe ausgebildet ist, wodurch ermöglicht wird, dass die mindestens eine Filterscheibe derart über das Befestigungsmittel geschoben werden kann, dass die Handhabungsvorrichtung von der mindestens einen Filterscheibe getrennt wird, indem die Handhabungsvorrichtung von der Mitte der mindestens einen Filterscheibe hinausgeschoben wird; und
ein Anpassungsglied (40), das mit dem zweiten Endabschnitt des Mittelpfostenglieds betriebsbereit verbunden ist, um die mindestens eine Filterscheibe zu stützen, wenn die mindestens eine Filterscheibe bezüglich des Mittelpfostenglieds betriebsbereit positioniert wird;
Befestigen einer vertikalen Hebevorrichtung (80) an der Handhabungsvorrichtung; und
Vertikales Heben der Handhabungsvorrichtung und der mindestens einen Filterscheibe;
Wiederanordnen der mindestens einen Filterscheibe von der ersten Position zu der zweiten Position; und
an der zweiten Position, Hinausschieben der Handhabungsvorrichtung von der Mitte der mindestens einen Filterscheibe, so dass die Handhabungsvorrichtung von der mindestens einen Filterscheibe entfernt wird.

## Revendications

1. Appareil (10) pour manipuler des disques filtrants (14), l'appareil comprenant :
un élément à montant central (30) ayant une première et une deuxième portions d'extrémité ;
un moyen de fixation (20) raccordé de façon opérationnelle à la première portion d'extrémité de l'élément à montant central, le moyen de fixation incluant un moyen pour faciliter le levage d'au moins un disque filtrant à partir d'une première position jusqu'à une deuxième position, le moyen de fixation ayant une dimension externe qui est plus petite qu'une ouverture centrale pratiquée dans ledit au moins un disque filtrant, ce qui permet audit au moins un disque filtrant d'être glissé au-dessus du moyen de fixation de telle sorte que l'appareil soit séparé dudit au moins un disque filtrant en faisant glisser l'appareil hors du centre dudit au moins un disque filtrant ; et
un élément adaptateur (40) raccordé de façon opérationnelle à la deuxième portion d'extrémité de l'élément à montant central, afin de soutenir ledit au moins un disque filtrant lorsque ledit au moins un disque filtrant est positionné de façon opérationnelle par rapport à l'appareil.

2. Appareil selon la revendication 1, comprenant en outre :
un dispositif de levage (80) raccordé de façon opérationnelle au moyen de fixation (20) afin de soulever l'appareil de manipulation (10) dans le plan vertical de sorte que ledit au moins un disque filtrant (14) puisse être transporté depuis la première position jusqu'à la deuxième position.

3. Appareil selon la revendication 1, la première position étant une position "installée" à l'intérieur d'un ensemble de filtre (100) dans lequel du fluide passe à travers ledit au moins un disque filtrant (14) lequel est positionné de façon opérationnelle par rapport à l'élément à montant central (30), et la deuxième position étant un emplacement distant situé à l'extérieur de l'ensemble de filtre où ledit au moins un disque filtrant peut être enlevé de l'élément à montant central et remplacé par un disque filtrant neuf sur celui-ci.

4. Appareil selon la revendication 1, ledit au moins un disque filtrant (14) étant positionné de façon opérationnelle par rapport à l'élément à montant central (30) en faisant glisser ledit au moins un disque au-dessus de la première portion d'extrémité de l'élément à montant central.

5. Appareil selon la revendication 1, dans lequel
la première position est une position "installée" et la deuxième position est un emplacement distant, la position "installée" étant celle où l'appareil de manipulation (10) est positionné de façon opérationnelle à l'intérieur d'un ensemble de filtre (100) et l'emplacement distant étant un emplacement situé à l'extérieur de l'ensemble de filtre,
l'appareil de manipulation comprenant en outre :
un dispositif de levage (80), raccordé de façon opérationnelle au moyen de fixation (20), afin d'enlever l'appareil de manipulation de l'ensemble de filtre de sorte que ledit au moins un disque filtrant (14) puisse être transporté depuis la position "installée" jusqu'à l'emplacement distant.

6. Appareil selon la revendication 2 ou la revendication 5, dans lequel le dispositif de levage (80) comprend :
un treuil à fonctionnement motorisé.

7. Appareil selon la revendication 2 ou la revendication 5, dans lequel le dispositif de levage (80) comprend :
un treuil à chaînes à actionnement manuel.

8. Appareil selon la revendication 5, dans lequel l'emplacement distant comprend :
un emplacement où ledit au moins un disque filtrant (14) peut être enlevé et remplacé par un disque filtrant neuf.

9. Appareil selon la revendication 1 ou la revendication 5, dans lequel le moyen de fixation (20) comprend :
un ensemble de boulon à oeil dont les filetages sont associés à celui-ci afin de s'engager avec les filetages correspondants formés sur la première portion d'extrémité de l'élément à montant central (30).

10. Appareil selon la revendication 1 ou la revendication 5, dans lequel le moyen de fixation (20) comprend :
un ensemble de bague de treuil pivotant dont les filetages sont associés à celui-ci, les filetages s'engageant avec des filetages correspondants formés sur la première portion d'extrémité de l'élément à montant central (30).

11. Appareil selon la revendication 1 ou la revendication 5, dans lequel le moyen de fixation (20) comprend un oeil de levage qui est soudé sur la première portion d'extrémité de l'élément à montant central (30).

12. Appareil selon la revendication 1 ou la revendication 5, dans lequel l'élément adaptateur (40) est configuré de façon à soutenir au moins quatorze disques filtrants.

13. Appareil selon la revendication 12, dans lequel l'élément adaptateur (40) est configuré de façon à soutenir au moins cinquante-six disques filtrants.

14. Appareil selon la revendication 1 ou la revendication 5, dans lequel l'élément adaptateur (40) possède des filetages femelles (42) qui sont formés dans celui-ci afin de s'engager de façon opérationnelle avec des filetages mâles correspondants (32) formés sur la deuxième portion d'extrémité de l'élément à montant central (30).

15. Appareil selon la revendication 1 ou la revendication 5, dans lequel l'élément adaptateur (40) comprend en outre au moins une ouverture (48) qui est formée dans celui-ci, ladite au moins une ouverture procurant un passage d'écoulement à travers l'élément adaptateur.

16. Appareil selon la revendication 15, dans lequel ladite au moins une ouverture est semi-circulaire (49).

17. Ensemble de logement de filtre (100) comprenant :
un logement (60, 70, 200) avec une chambre interne destinée à traiter du fluide, un axe central et une portion inférieure ;
un élément socle (50, 64, 66, 266) avec une surface supérieure et une surface inférieure opposées ainsi qu'au moins une portion d'entrée (270) et une portion de sortie (272), la surface supérieure étant utilisée pour s'engager de façon étanche avec la portion inférieure (268) du logement ; et
au moins un ensemble de pièce rapportée (71, 274) engagé de façon étanche à l'intérieur de ladite au moins une portion de sortie de l'élément socle, l'ensemble de pièce rapportée comprenant :
une surface supérieure qui s'accouple avec la surface supérieure de l'élément socle ; et
une ouverture centrale pour assurer un engagement étanche avec un appareil de manipulation (10), selon la revendication 1, lequel possède au moins un disque filtrant (14) qui est engagé sur celui-ci, l'ouverture centrale procurant un trajet d'écoulement dépourvu de crevasses à travers l'ensemble de pièce rapportée lorsque l'appareil de manipulation est désengagé de celle-ci de sorte qu'après avoir retiré l'appareil de manipulation de disques filtrants de son engagement étanche avec la portion inférieure du logement, il en résultera un trajet d'écoulement sensiblement direct pour le fluide, ce qui facilite le nettoyage de la chambre interne du logement.

18. Ensemble de filtre selon la revendication 17, dans lequel la surface supérieure de l'élément socle (266) possède une portion surélevée qui est située sur la périphérie ainsi qu'une portion inférieure qui est positionnée de façon adjacente à l'ensemble de pièce rapportée (71, 274).

19. Ensemble de filtre selon la revendication 18, dans lequel la surface supérieure possède une portion de transition (210) entre la portion surélevée et la portion inférieure, la portion de transition se trouvant à un angle par rapport à la portion inférieure.

20. Ensemble de filtre selon la revendication 17, dans lequel le moyen de fixation (20) de l'appareil de manipulation (10) inclut un moyen (18) permettant un raccordement à l'élément à montant central (30) ainsi qu'un désengagement au niveau dudit au moins un ensemble de pièce rapportée (71, 274) ; et
l'élément adaptateur (40) s'engage de façon étanche avec l'ouverture centrale de l'ensemble de pièce rapportée lorsque l'appareil de manipulation se trouve en position "installée" dans le logement (60, 70, 200).

21. Ensemble de filtre, selon la revendication 20, comprenant en outre :
au moins un disque filtrant (14) avec une ouverture centrale qui est formée de façon opérationnelle dans celui-ci.

22. Ensemble de filtre, selon la revendication 21, la surface supérieure de l'élément socle (266) étant inclinée vers le bas en direction de l'ensemble de pièce rapportée (71, 274).

23. Ensemble de filtre, selon la revendication 17 ou la revendication 21, dans lequel la surface supérieure de l'élément socle (266) inclut une portion surélevée qui est positionnée le long de la périphérie de la surface supérieure et une région centrale, la portion surélevée s'engageant avec la portion inférieure (268) du logement (200) et étant raccordée à la région centrale par une surface concave.

24. Ensemble de filtre, selon la revendication 20 ou la revendication 21, l'élément adaptateur (40) comprenant en outre :
au moins une rainure circonférentielle (42, 43) laquelle est formée dans une portion externe de l'élément adaptateur afin de recevoir un joint torique et de faciliter l'engagement étanche de l'élément adaptateur avec l'ouverture centrale de l'ensemble de pièce rapportée (71, 274).

25. Ensemble de filtre, selon la revendication 24, l'élément adaptateur (40) comprenant en outre :
au moins une ouverture (48) qui est formée dans celui-ci, afin de procurer un passage d'écoulement à travers l'élément adaptateur lorsque l'élément à montant central (30) se trouve dans la position "installée".

26. Ensemble de filtre selon la revendication 25, dans lequel ladite au moins une ouverture est semi-circulaire (49).

27. Procédé pour manipuler des disques filtrants (14) à partir d'une première position jusqu'à une deuxième position de sorte que les disques filtrants usagés soient enlevés, le procédé comprenant les actions consistant à :
monter au moins un disque filtrant (14) de façon opérationnelle sur un appareil de manipulation (10), l'appareil de manipulation comportant :
un élément à montant central (30) ayant une première portion d'extrémité et une deuxième portion d'extrémité ;
un moyen de fixation (20) engagé de façon opérationnelle avec la première portion d'extrémité de l'élément à montant central, et incluant un moyen pour faciliter le levage d'au moins un disque filtrant à partir d'une première position jusqu'à une deuxième position, le moyen de fixation ayant une dimension externe qui est plus petite qu'une ouverture centrale pratiquée dans ledit au moins un disque filtrant, ce qui permet audit au moins un disque filtrant d'être glissé au-dessus du moyen de fixation de telle sorte que l'appareil de manipulation soit séparé dudit au moins un disque filtrant en faisant glisser l'appareil de manipulation hors du centre dudit au moins un disque filtrant ; et
un élément adaptateur (40) raccordé de façon opérationnelle à la deuxième portion d'extrémité de l'élément à montant central, afin de soutenir ledit au moins un disque filtrant lorsque ledit au moins un disque filtrant est positionné de façon opérationnelle par rapport à l'élément à montant central ;
attacher un dispositif de levage vertical (80) à l'appareil de manipulation ; et
soulever l'appareil de manipulation et ledit au moins un disque filtrant dans le plan vertical ;
repositionner ledit au moins un disque filtrant depuis la première position jusqu'à la deuxième position ; et
au niveau de la deuxième position, faire glisser l'appareil de manipulation hors du centre dudit au moins un disque filtrant de sorte que l'appareil de manipulation soit enlevé dudit au moins un disque filtrant.
